# EUROPÄISCHE PATENTSCHRIFT

(11) **EP 3 445 960 B1**
(45) Veröffentlichungstag und Bekanntmachung des Hinweises auf die Patenterteilung: **17.11.2021**
(21) Anmeldenummer: 17713914.4
(22) Anmeldetag: 24.03.2017
(51) Int. Cl.: F02D 9/04, F02D 9/10, F02M 26/65, F02M 26/70, F16K 1/20

(54) **ABGASKLAPPENVORRICHTUNG FÜR EINE VERBRENNUNGSKRAFTMASCHINE**
EXHAUST FLAP DEVICE FOR AN INTERNAL COMBUSTION ENGINE
DISPOSITIF À CLAPET DE GAZ D'ÉCHAPPEMENT POUR UN MOTEUR À COMBUSTION INTERNE

(30) Priorität: 20.04.2016 DE 102016107265
(43) Veröffentlichungstag der Anmeldung: 27.02.2019
(73) Patentinhaber: Pierburg GmbH, 41460 Neuss (DE)
(72) Erfinder: HAMBLOCH, Stephan, 52459 Inden/Altdorf (DE); KAMARYS, DR., Dirk, 47877 Willich-Neersen (DE); EEKHOUT, Robin, 6102TK Echt (NL); VON DER BEEK, Krischan, 41462 Neuss (DE); RÖHL, Reinhard, 40474 Düsseldorf (DE); RAJEWSKI, Justin, 50739 Köln (DE)
(74) Vertreter: terpatent Patentanwälte ter Smitten Eberlein-Van Hoof Rütten Daubert
(86) Internationale Anmeldenummer: PCT/EP2017/057059
(87) Internationale Veröffentlichungsnummer: WO 2017/182233

(56) Entgegenhaltungen:
- WO-A1-2014/086537
- DE-A1-102006 048 442
- DE-A1-102012 111 810
- DE-A1-102013 101 983
- DE-A1-102014 104 577
- US-A- 5 630 571

## Beschreibung

Die Erfindung betrifft eine Abgasklappenvorrichtung für eine Verbrennungskraftmaschine mit einem Strömungsgehäuse, welches einen Strömungskanal begrenzt, einem Klappenkörper, einer Welle, auf der der Klappenkörper befestigt ist, mindestens einem Radiallager, über das die Welle in mindestens einer Lageraufnahme des Strömungsgehäuses radial gelagert ist und einer Dichtungsanordnung, welche eine Keramikscheibe und eine auf der Welle befestigte Buchse aufweist.

Derartige Abgasklappenvorrichtungen können in Form von Schmetterlingsventilen hergestellt und beispielsweise als Abgasrückführklappe oder Abgasstauklappe eingesetzt werden.

Eine besondere Aufmerksamkeit bei der Konstruktion derartiger Abgasklappenvorrichtungen gilt dabei den verwendeten Abdichtungsanordnungen und Axiallagerungen, welche einerseits möglichst reibungsfrei arbeiten sollen und andererseits sowohl bei erhöhter thermischer Belastung als auch in der im Abgasbereich vorhandenen aggressiven Umgebung zuverlässig abdichten müssen. Insbesondere sind dabei auch auf die verwendeten Materialpaarungen in der Dichtungsanordnung von hoher Relevanz, da bei Temperaturschwankungen von -50°C von bis zu 650°C auch thermische Dehnungen ausgeglichen werden müssen, ohne dass dies zu einer Schwergängigkeit oder erhöhter Leckage führt. Des Weiteren müssen die verwendeten Werkstoffe korrosionsunempfindlich sein und möglichst wenig Anhaftungen beispielsweise durch Ruß oder wasserhaltige Ölnebel zulassen, um ein Verklemmen zuverlässig verhindern zu können. Aus diesen Gründen ist eine Vielzahl unterschiedlicher Axiallager mit Wellenabdichtungen bekannt geworden, durch die Leckagen entlang der Welle und durch das Axiallager in die Umgebung verhindert werden sollen.

So wird in der US 5,630,571 eine Abgasklappenvorrichtung vorgeschlagen, bei der auf der Welle eine Stahlbuchse befestigt ist, welche eine sphärische Wölbung aufweist, die gegen eine entsprechend geformte sphärische Ausnehmung einer Keramikscheibe anliegt, welche an einer am Gehäuse befestigten Buchse befestigt ist, so dass eine Drehbewegung zwischen der Keramikscheibe und der auf der Welle befestigten Buchse bei Drehung der Welle entsteht. Eine Wellfeder, die zwischen einem am Ende der Welle befestigten Hebel und der am Gehäuse befestigten Buchse eingespannt ist, zieht die Welle mit der Buchse gegen die Keramikscheibe, wodurch auch durch die Ausformung der gegeneinander reibenden Flächen eine Leckage zwischen diesen Flächen, die zu einem Leckagestrom entlang der Welle nach außen führen könnte, vermieden werden.

Zusätzlich sind aus der DE 10 2006 048 442 A1 verschiedene Sinterelemente bekannt, die aus chromhaltigen Metallpulvern hergestellt sind und Karbidlegierungsbestandteile und Molybdänsilicid aufweisen.

Problematisch an dieser Dichtungsanordnung ist jedoch, dass die aus Stahl bestehende Buchse und die Keramikscheibe durch den über die Feder übertragenen Druck zwar zunächst eine gute Abdichtwirkung erzielen, jedoch einem deutlich erhöhten Verschleiß unterliegen, der die Dauerhaltbarkeit dieser Abdichtung deutlich beschränkt. Zusätzlich werden durch den dann auftretenden Verschleiß auch die notwendigen Stellkräfte erhöht, da die Reibung deutlich steigt.

Es stellt sich daher die Aufgabe, eine Abgasklappenvorrichtung zu schaffen, bei der die Reibung im Bereich der Dichtungsanordnung dauerhaft verringert wird, so dass eine Leckage über die gesamte Lebensdauer der Vorrichtung gering bleibt. Die aufzubringenden Stellkräfte sollen ebenfalls dauerhaft verringert werden, indem eine wachsende Reibung und ein Verschleiß möglichst ausgeschlossen werden. Zusätzlich soll die Abgasklappenvorrichtung thermisch belastbar und unempfindlich gegen aggressive Medien im Abgas sein.

Diese Aufgabe wird durch eine Abgasklappenvorrichtung für eine Verbrennungskraftmaschine mit den Merkmalen des Hauptanspruchs 1 gelöst.

Dadurch, dass ein Axiallager in einer Bohrung befestigt ist und aus einem gesinterten Metallpulver einer hochchromhaltigen Eisenlegierung hergestellt ist und eine austenitische und ferritische Verbundstruktur mit Karbidlegierungsbestandteilen und gleichmäßig verteilten Festschmierstoffphasen aufweist und axial gegen die Keramikscheibe belastet ist, welche frei drehbar die Welle umgibt, wobei das Axiallager eine zur Keramikscheibe gerichtete sphärische Ausnehmung aufweist, gegen welche eine korrespondierend geformte sphärische Wölbung der Keramikscheibe anliegt, und wobei die Keramikscheibe mittels eines Federelementes in Richtung des Axiallagers belastet ist, wird eine Reibungspaarung hergestellt, bei der der Verschleiß minimiert wird, da über die Zeit ein Einlaufen der Reibpartner erfolgt, bei dem die Unebenheiten der zur Keramikscheibe gewandten Oberfläche des Axiallagers durch die härtere Keramik abgerieben werden. Dieses abgeriebene Material setzt sich in die Vertiefungen der Keramik, so dass sehr glatte Reibflächen entstehen, die zu einer Erhöhung der Kontaktfläche und somit zu einer Verringerung der Leckage führen, die entsprechend über die Laufzeit sinkt. Durch die vorhandenen Festschmierstoffe wird zusätzlich die vorhandene Reibkraft verringert, so dass geringere Stellkräfte notwendig sind. Das Axiallager bleibt auch bei hohen Temperaturen selbstschmierend. Die Keramikscheibe und das Axiallager weisen eine hohe chemische Beständigkeit und gute Gleiteigenschaften über den gesamten Temperaturbereich auf. Durch die Ausformung der beiden gegeneinander gerichteten und zueinander drehbeweglichen Oberflächen der Keramikscheibe und des Axiallagers wird die Dichtwirkung erhöht, da die Fläche vergrößert wird und die Anlageposition festgelegt wird. Ein relatives Verschieben der Keramikscheibe zum Axiallager wird so vermieden.

Vorzugsweise enthält das Axiallager als Festschmierstoff Molybdändisulfid, welches auch bei hohen Temperaturen weiterhin gute Gleiteigenschaften aufweist, unempfindlich gegen die Bestandteile des Abgases ist und sich in die rauen Oberflächen der Keramikscheibe und des Axiallagers setzt.

In einer besonders bevorzugten Ausführung enthält das Axiallager 0,8 Gew.% bis 1,4 Gew.% Kohlenstoff, 18 Gew.% bis 23 Gew.% Chrom, 4,5 Gew.% bis 6,5 Gew.% Molybdän, 1 Gew.% bis 2 Gew.% Vanadium, 1,5 Gew.% bis 2,5 Gew.% Wolfram, 2 Gew.% bis 5 Gew.% Nickel, 1 Gew.% bis 2 Gew.% Schwefel, 0,5 Gew.% bis 2 Gew.% Silizium, maximal 1 Gew.% weitere Elemente sowie den Rest Eisen. Es handelt sich um eine Verbund-Mikrostruktur einer ferritisch austenitischen Duplex-Matrix, welche bei der Verwendung als Axiallager zu einer deutlichen Senkung der Reibbeiwerte bei hoher Lebensdauer und minimiertem Verschleiß auch bei hoher thermischer Belastung führt, Blei, Quecksilber Cadmium und sechswertiges Chrom sind in der chemischen Zusammensetzung zu vermeiden.

In einer hierzu alternativen Ausführung enthält das Axiallager 1,1 Gew.% bis 1,4 Gew.% Kohlenstoff, 16 Gew.% bis 20 Gew.% Chrom, 4,8 Gew.% bis 7,0 Gew.% Molybdän, 16 Gew.% bis 20 Gew.% Nickel, 0,5 Gew.% bis 1,5 Gew.% Silizium, maximal 2 Gew.% weitere Elemente sowie den Rest Eisen. Mit dieser Zusammensetzung werden noch bessere Ergebnisse erzielt, jedoch ist die Herstellung geringfügig teurer.

In einer ersten bevorzugten Ausführungsform ist die Buchse der Dichtungsanordnung drehmomentübertragend formschlüssig mit der Keramikscheibe verbunden und liegt von einer zum Axiallager entgegengesetzten Seite gegen die Keramikscheibe an. Dadurch wird erreicht, dass die Keramikscheibe immer mit der Buchse und der Welle gedreht wird, wodurch der Ort der entstehenden Relativbewegungen festgelegt wird. Entsprechend tritt kein Verschleiß an der zum Axiallager gegenüberliegenden Seite der Keramikscheibe auf.

In einer hierzu alternativen besonders bevorzugten Ausbildung der Erfindung ist die Buchse der Dichtungsanordnung drehmomentübertragend formschlüssig oder stoffschlüssig mit einer Gleitscheibe verbunden ist, welche zwischen der Keramikscheibe und der Buchse angeordnet ist. Die Keramikscheibe erhält durch diese Anordnung einen zusätzlichen Reibpartner, so dass die während der Lebensdauer vorhandenen Relativbewegungen zwischen den Bauteilen reduziert werden, während die Abdichtung zwischen der Gleitschiebe und der Keramikscheibe in gleicher Weise funktioniert wie zwischen dem Axiallager und der Keramikscheibe. Im Vergleich zur zuvor beschriebenen Ausführung wird eine Leckage zwischen der Buchse und der Keramikscheibe vermieden, da die Gleitscheibe mit der Buchse einfach fest verbunden wird, so dass kein zusätzlicher Spalt entsteht.

Vorzugsweise ist die Welle mit der Buchse über das Federelement in Richtung des Axiallagers belastet, so dass die Dichtungsanordnung zusammengedrückt wird. So wird einerseits die Dichtwirkung verstärkt und andererseits eine zuverlässige axiale Lagerung der Welle hergestellt.

In einer hierzu weiterführenden Ausbildung der Erfindung ist das Federelement vorgespannt zwischen dem von der Keramikscheibe abgewandten Ende des Axiallagers und einem Hebel eingespannt, der an einem Ende der Welle befestigt ist, wobei der Hebel mit einem Aktor zur Betätigung der Welle verbindbar ist. So wird auf einfache und gut montierbare Weise die Dichtungsanordnung gespannt.

Es ist vorteilhaft, wenn die formschlüssige Verbindung durch zwei am Umfang der Buchse gegenüberliegend angeordnete und in Axialrichtung weisende Vorsprünge, die in entsprechend geformte Ausnehmungen der Gleitscheibe oder der Keramikscheibe greifen, hergestellt ist. Diese Vorsprünge und Ausnehmungen sind einfach herstellbar und sorgen dennoch für eine vollständige Drehmomentübertragung, so dass ein ungewolltes Reiben an diesen Materialpaarungen vermieden wird.

Vorzugsweise enthält auch die Gleitscheibe 0,8 Gew.% bis 1,4 Gew.% Kohlenstoff, 18 Gew.% bis 23 Gew.% Chrom, 4,5 Gew.% bis 6,5 Gew.% Molybdän, 1 Gew.% bis 2 Gew.% Vanadium, 1,5 Gew.% bis 2,5 Gew.% Wolfram, 2 Gew.% bis 5 Gew.% Nickel, 1 Gew.% bis 2 Gew.% Schwefel, 0,5 Gew.% bis 2 Gew.% Silizium, maximal 1 Gew.% weitere Elemente sowie den Rest Eisen oder 1,1 Gew.% bis 1,4 Gew.% Kohlenstoff, 16 Gew.% bis 20 Gew.% Chrom, 4,8 Gew.% bis 7,0 Gew.% Molybdän, 16 Gew.% bis 20 Gew.% Nickel, 0,5 Gew.% bis 1,5 Gew.% Silizium, maximal 2 Gew.% weitere Elemente sowie den Rest Eisen. Beide Materialien weisen sehr gute Gleiteigenschaften, einen geringen Verschleiß und eine hohe thermische und chemische Beständigkeit auf.

Insbesondere ist es vorteilhaft, wenn die Keramikscheibe aus einem mit Magnesiumoxid stabilisiertem Zirkonoxid besteht. Dieser Werkstoff ist sehr fest und weist gute tribologische Eigenschaften hinsichtlich Reibung und Verschleiß auf. Zusätzlich ist diese Keramik korrosionsbeständig.

Des Weiteren ist die Buchse vorzugsweise aus Edelstahl, insbesondere aus 1.4828 hergestellt. Auch dieser Edelstahl ist korrosionsbeständig und verschleißfest.

Es wird somit eine Abgasklappenvorrichtung geschaffen, welche durch die Verwendung optimal aufeinander abgestimmter Materialien eine hohe Lebensdauer der Dichtungsanordnung und Axiallagerung bei gleichbleibender Qualität aufweist, da ein Verschleiß der dichtenden und lagernden Bauteile durch eine unerwünschte erhöhte Reibung in allen Betriebszuständen minimiert wird. Stattdessen wird bei sehr einfachem Aufbau der Abgasklappenvorrichtung eine hohe Dichtigkeit entlang der Welle nach außen bei optimierten Gleiteigenschaften und verringertem Verschleiß erreicht, so dass auch die benötigten Stellkräfte über die Lebensdauer nicht erhöht werden. Stattdessen findet ein Einlaufen der Reibpartner statt, durch welches die Dichtigkeit mit wachsender Betätigungszahl ansteigt. Die Abgasklappenvorrichtung weist eine große Unempfindlichkeit gegen thermische und chemische Einflüsse, insbesondere gegen im Abgas vorhandene Schadstoffe, auf.

Ein Ausführungsbeispiel einer erfindungsgemäßen Abgasklappenvorrichtung ist in der Figur dargestellt und wird nachfolgend beschrieben.

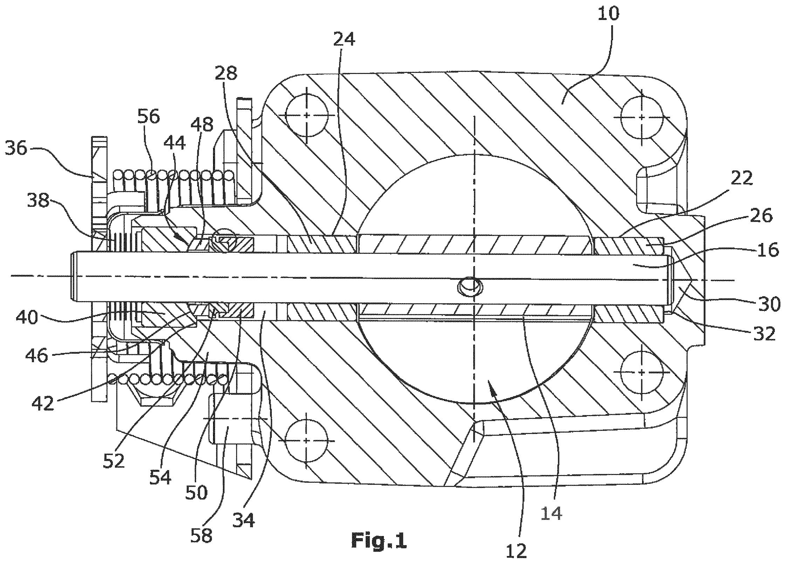

Die Figur 1 zeigt einen Querschnitt einer erfindungsgemäßen Abgasklappenvorrichtung in geschnittener Darstellung, und
Figur 2 zeigt schematisch eine formschlüssige Verbindung zwischen einer Buchse und einer Gleitscheibe gemäß der Abgasklappenvorrichtung aus Figur 1 in perspektivischer Darstellung.

Die erfindungsgemäße Abgasklappenvorrichtung besteht aus einem Strömungsgehäuse 10, in dem ein Strömungskanal 12 ausgebildet ist. Ein freier durchströmbarer Querschnitt dieses Strömungskanals 12 wird durch Drehung eines Klappenkörpers 14 im Strömungskanal 12 geregelt. Der Klappenkörper 14 ist hierzu auf einer Welle 16 befestigt, welche beidseitig zentrisch im Strömungsgehäuse 10 gelagert ist, so dass der Klappenkörper 14 durch die Welle 16 in zwei Klappenhälften geteilt wird. Zur Lagerung sind am Strömungsgehäuse 10 gegenüberliegende Lageraufnahmen 22, 24 ausgebildet, in denen jeweils ein Lager 26, 28 welches als Radialgleitlager ausgeführt ist, angeordnet ist.

Das eine Ende der Welle 16 ragt in ein Sackloch 30, welches als Lageraufnahme 22 dient und in dem das Lager 26 angeordnet ist. Dieses Lager 26 liegt axial mit seinem einen Ende gegen einen im Sackloch 30 ausgebildeten Absatz 32 an, während das andere Ende des Lagers 26 zum Strömungskanal 12 weist, gegenüberliegend zum Klappenkörper 14 angeordnet ist und sich bis unmittelbar zum Strömungskanal 12 erstreckt. Das entgegengesetzte Ende der Welle 16 ragt durch eine Bohrung 34 aus dem Strömungsgehäuse 10 nach außen und ist über einen auf dem Ende der Welle 16 befestigten Hebel 36 mit einem nicht dargestellten Aktor gekoppelt, über welchen die Welle 16 mit dem Klappenkörper 14 im Strömungskanal 12 drehbar ist. Die Bohrung 34 bildet die Lageraufnahme 24 aus, welche sich in dem zum Strömungskanal 12 weisenden Bereich der Bohrung 34 befindet, so dass das Lager 28 gegenüberliegend zum Klappenkörper 14 angeordnet ist. Zusätzlich wird die Welle 16 über ein als Druckfeder ausgebildetes Federelement 38, welches sich gegen den Hebel 36 abstützt, in Richtung des Hebels 36 belastet, so dass der Klappenkörper 14 mit seinem die Welle 16 umgebenden Bereich in Richtung des Lagers 28 belastet ist.

Am Strömungsgehäuse 10 ist ein Vorsprung 54 angeordnet, in dem die Dichtungsanordnung 44 sowie die Bohrung 34 ausgebildet sind. Dieser Vorsprung 54 ist von einer Drehfeder 56 umgeben, die als Rückdrehfeder dient und deren Enden am Hebel 36 und an einem Anschlag 58 am Strömungsgehäuse 10 vorgespannt anliegen, so dass die Welle 16 in Schließrichtung des Klappenkörpers 14 vorgespannt ist. Gegen ein Eindringen von Flüssigkeit von außen ist am Hebel 36 eine Hülse befestigt, die den Vorsprung 54 mit geringem Abstand umgibt und mit der Welle 16 gedreht wird.

Das zum Hebel 36 entgegengesetzte Ende des Federelementes 38 stützt sich gegen ein Axiallager 40 ab, dessen gegenüberliegende Seite im radial äußeren Bereich gegen einen Absatz 42 anliegt, der in der Bohrung 34 ausgebildet ist, so dass die Federkraft über den Absatz 42 aufgenommen werden kann und die Welle 16 mit dem Klappenkörper 14 in Richtung des Lagers 28 belastet wird. Die zum Strömungskanal 12 weisende Seite des Axiallagers 40, welche Teil einer Dichtungsanordnung 44 ist, weist im radial inneren Bereich eine sphärische Ausnehmung 46 auf, die gegen eine korrespondierende sphärische Wölbung einer Keramikscheibe 48 anliegt, die durch die Kraft der Druckfeder 38 gegen das Axiallager 40 gedrückt wird. Dies erfolgt, indem auf der Welle 16 eine Buchse 50 aus Edelstahl befestigt wird, welche in einem Drehmoment übertragenden Formschluss mit einer Gleitscheibe 52 verbunden ist, die durch die Buchse 50 gegen die Keramikscheibe 48 gedrückt wird, da die Druckfeder 38 die Buchse 50 gegen die Gleitscheibe 52 und diese gegen die Keramikscheibe 48 belastet, welche hierdurch wiederum in die sphärische Ausnehmung des in der Bohrung des Strömungsgehäuses 10 befestigten Axiallagers 40 gedrückt wird. Die Keramikscheibe 48 ist dabei sowohl zum Strömungsgehäuse 10 als auch zur Welle 16 frei drehbar.

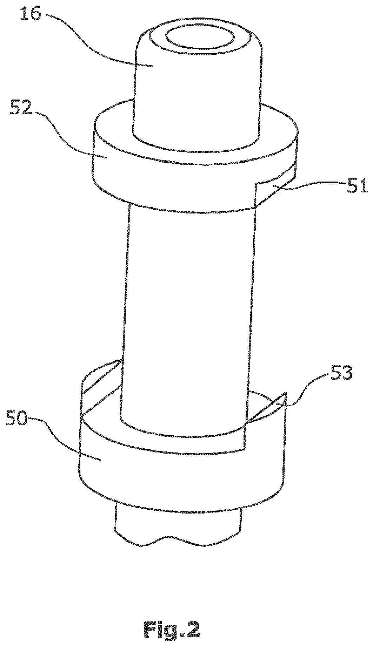

In der Figur 2 ist der Formschluss zwischen der Buchse 50 und der Gleitscheibe 52 dargestellt. Hierzu sind am radial äußeren Umfang der Buchse 50 zwei gegenüberliegende, sich axial in Richtung der Gleitscheibe 52 erstreckende Vorsprünge 53 ausgebildet, die in korrespondierend ausgeformten Ausnehmungen 51 am äußeren Umfang der Gleitscheibe 52 greifen.

Durch diese Dichtungsanordnung 44 kann Abgas aus dem Strömungskanal 12 weder entlang der Welle 16 noch entlang der Innenwand der Bohrung 34 strömen. Auch eine Leckageströmung zwischen der Buchse 50, der Gleitscheibe 52, der Keramikscheibe 48 und dem Axiallager 40 wird vermieden, da diese Teile gegeneinander anliegen und jeweils Reibungspaarungen vorgesehen werden, welche einer geringen Reibung und einem niedrigen Verschleiß unterliegen, so dass über eine lange Lebensdauer die Dichtigkeit erhalten wird. Hierzu sind die Gleitscheibe 52 und das Axiallager 40 aus einem gesinterten Metallpulver einer hochchromhaltigen Eisenlegierung hergestellt und weisen eine austenitische und ferritische Matrix-Verbundstruktur mit Karbidlegierungsbestandteilen und gleichmäßig verteilten Festschmierstoffphasen, welche insbesondere aus Molybdändisulfid bestehen, auf. Ein solches Material weist als chemische Zusammensetzung 0,8 Gew.% bis 1,4 Gew.% Kohlenstoff, 18 Gew.% bis 23 Gew.% Chrom, 4,5 Gew.% bis 6,5 Gew.% Molybdän, 1 Gew.% bis 2 Gew.% Vanadium, 1,5 Gew.% bis 2,5 Gew.% Wolfram, 2 Gew.% bis 5 Gew.% Nickel, 1 Gew.% bis 2 Gew.% Schwefel, 0,5 Gew.% bis 2 Gew.% Silizium, maximal 1 Gew.% weitere Elemente und als Rest Eisen auf, Bei der Herstellung einer solchen Gleitscheibe 52 und eines derartigen Axiallagers 40 sollte beachtet werden, dass möglichst wenige interkristalline Oxidschichten entstehen. Des Weiteren sollte kein Blei, Quecksilber Cadmium oder sechswertiges Chrom enthalten sein.

Die zwischen dem Axiallager 40 und der Gleitscheibe 52 angeordnete und relativ zu diesen drehbewegliche Keramikscheibe ist aus ZN 40, welches ein mit Magnesiumoxid stabilisiertes Zirkonoxid ist. Die Buchse ist aus Edelstahl, insbesondere aus 1.4828 hergestellt. Eine relative Drehung findet in diesem Fall lediglich beidseits der Keramikscheibe 48 zwischen der Keramikscheibe 48 und der Gleitscheibe 52 beziehungsweise dem Axiallager 40 statt und somit immer zwischen der harten, verschleißfesten Oberfläche der Keramikscheibe 48 und einem weicheren Bauteil mit Festschmierstoffen, welche sich mit dem übrigen durch die harte Keramik abgescherten Material des Axiallagers 40 und der Gleitscheibe 52 in die oberflächlichen Lücken der Keramikscheibe 48 setzen, so dass die Unebenheiten zwischen den Reibpartnern im Laufe der Zeit geringer werden. Dies erhöht die Dichtwirkung zwischen diesen Bauteilen durch eine große erzeugte Auflagefläche und einem verringerten Spalt und verhindert zuverlässig einen weitergehenden Verschleiß, da keine scherenden Vorsprünge mehr vorhanden sind.

Es hat sich gezeigt, dass bei dieser Materialkombination die Reibbeiwerte sowie daraus folgend der Verschleiß signifikant gesenkt werden konnten und die Leckage entlang der Welle über die Lebensdauer reduziert werden konnte, da die Auflageflächen durch die Beseitigung der Unebenheiten zwischen den Reibpartnern vergrößert werden, und zwar unabhängig von der aggressiven Umgebung des Abgases und der thermischen Belastung von bis zu 650°C. Durch diese über die gesamte zu erwartende Lebensdauer gesenkte Reibung sinken auch die notwendigen Stellkräfte zur Verstellung der Klappe im Kanal, so dass Energie eingespart wird und die Belastung der Steller gesenkt wird. Zusätzlich ist eine hohe chemische Belastbarkeit gegeben.

Es sollte deutlich sein, dass die Zusammensetzungen im Rahmen des Hauptanspruchs geringfügig modifizierbar sind. Derartig gelagerte Klappenvorrichtungen können überall im Abgasstrang zur Regelung der geforderten Abgasmenge eingesetzt werden. Auch ist es möglich, die Buchse über Löt- oder Schweißverbindungen mit der Gleitscheibe zu verbinden. Gegebenenfalls kann auch auf die Gleitscheibe verzichtet werden und die Buchse direkt formschlüssig mit der Keramikscheibe verbunden werden, ohne den Schutzbereich des Hauptanspruchs zu verlassen.

## Patentansprüche

1. Abgasklappenvorrichtung für eine Verbrennungskraftmaschine mit einem Strömungsgehäuse (10), welches einen Strömungskanal (12) begrenzt,
einem Klappenkörper (14),
einer Welle (16), auf der der Klappenkörper (14) befestigt ist, mindestens einem Radiallager (26, 28), über das die Welle (16) in mindestens einer Lageraufnahme (22, 24) des Strömungsgehäuses (10) radial gelagert ist,
einer Dichtungsanordnung (44), welche eine Keramikscheibe (48) und eine auf der Welle (16) befestigte Buchse (50) aufweist,
**dadurch gekennzeichnet, dass**
ein Axiallager (40) in einer Bohrung (34) befestigt ist und aus einem gesinterten Metallpulver einer hochchromhaltigen Eisenlegierung hergestellt ist und eine austenitische und ferritische Verbundstruktur mit Karbidlegierungsbestandteilen und gleichmäßig verteilten Festschmierstoffphasen aufweist und axial gegen die Keramikscheibe (48) belastet ist, welche frei drehbar die Welle (16) umgibt, wobei das Axiallager (40) eine zur Keramikscheibe (48) gerichtete sphärische Ausnehmung (46) aufweist, gegen welche eine korrespondierend geformte sphärische Wölbung der Keramikscheibe (48) anliegt, wobei die Keramikscheibe (48) mittels eines Federelementes (38) in Richtung des Axiallagers (40) belastet ist.

2. Abgasklappenvorrichtung für eine Verbrennungskraftmaschine nach Anspruch 1,
**dadurch gekennzeichnet, dass**
das Axiallager (40) als Festschmierstoff Molybdändisulfid enthält.

3. Abgasklappenvorrichtung für eine Verbrennungskraftmaschine nach einem der Ansprüche 1 oder 2,
**dadurch gekennzeichnet, dass**
das Axiallager (40) 0,8 Gew.% bis 1,4 Gew.% Kohlenstoff, 18 Gew.% bis 23 Gew.% Chrom, 4,5 Gew.% bis 6,5 Gew.% Molybdän, 1 Gew.% bis 2 Gew.% Vanadium, 1,5 Gew.% bis 2,5 Gew.% Wolfram, 2 Gew.% bis 5 Gew.% Nickel, 1 Gew.% bis 2 Gew.% Schwefel, 0,5 Gew.% bis 2 Gew.% Silizium, maximal 1 Gew.% weitere Elemente sowie den Rest Eisen enthält.

4. Abgasklappenvorrichtung für eine Verbrennungskraftmaschine nach einem der Ansprüche 1 oder 2,
**dadurch gekennzeichnet, dass**
das Axiallager (40) 1,1 Gew.% bis 1,4 Gew.% Kohlenstoff, 16 Gew.% bis 20 Gew.% Chrom, 4,8 Gew.% bis 7,0 Gew.% Molybdän, 16 Gew.% bis 20 Gew.% Nickel, 0,5 Gew.% bis 1,5 Gew.% Silizium, maximal 2 Gew.% weitere Elemente sowie den Rest Eisen enthält.

5. Abgasklappenvorrichtung für eine Verbrennungskraftmaschine nach einem der vorhergehenden Ansprüche,
**dadurch gekennzeichnet, dass**
die Buchse (50) der Dichtungsanordnung (44) Drehmoment übertragend formschlüssig mit der Keramikscheibe (48) verbunden ist und von einer zum Axiallager (40) entgegengesetzten Seite gegen die Keramikscheibe (48) anliegt.

6. Abgasklappenvorrichtung für eine Verbrennungskraftmaschine nach einem der Ansprüche 1 bis 4,
**dadurch gekennzeichnet, dass**
die Buchse (50) der Dichtungsanordnung (44) Drehmoment übertragend formschlüssig oder stoffschlüssig mit einer Gleitscheibe (52) verbunden ist, welche zwischen der Keramikscheibe (48) und der Buchse (50) angeordnet ist.

7. Abgasklappenvorrichtung für eine Verbrennungskraftmaschine nach einem der vorhergehenden Ansprüche,
**dadurch gekennzeichnet, dass**
die Welle (16) mit der Buchse (50) über das Federelement (38) in Richtung des Axiallagers (40) belastet ist, so dass die Dichtungsanordnung (44) zusammengedrückt wird.

8. Abgasklappenvorrichtung für eine Verbrennungskraftmaschine nach einem der vorhergehenden Ansprüche,
**dadurch gekennzeichnet, dass**
das Federelement (38) vorgespannt zwischen dem von der Keramikscheibe (48) abgewandten Ende des Axiallagers (40) und einem Hebel (36) eingespannt ist, der an einem Ende der Welle (16) befestigt ist, wobei der Hebel (36) mit einem Aktor zur Betätigung der Welle (16) verbindbar ist.

9. Abgasklappenvorrichtung für eine Verbrennungskraftmaschine nach einem der Ansprüche 5 bis 8,
**dadurch gekennzeichnet, dass**
die formschlüssige Verbindung durch zwei am Umfang der Buchse (50) gegenüberliegend angeordnete und in Axialrichtung weisende Vorsprünge (53), die in entsprechend geformte Ausnehmungen (51) der Gleitscheibe (52) oder der Keramikscheibe (48) greifen, hergestellt ist.

10. Abgasklappenvorrichtung für eine Verbrennungskraftmaschine nach einem der Ansprüche 6 bis 9,
**dadurch gekennzeichnet, dass**
die Gleitscheibe (52) 0,8 Gew.% bis 1,4 Gew.% Kohlenstoff, 18 Gew.% bis 23 Gew.% Chrom, 4,5 Gew.% bis 6,5 Gew.% Molybdän, 1 Gew.% bis 2 Gew.% Vanadium, 1,5 Gew.% bis 2,5 Gew.% Wolfram, 2 Gew.% bis 5 Gew.% Nickel, 1 Gew.% bis 2 Gew.% Schwefel, 0,5 Gew.% bis 2 Gew.% Silizium, maximal 1 Gew.% weitere Elemente sowie den Rest Eisen enthält.

11. Abgasklappenvorrichtung für eine Verbrennungskraftmaschine nach einem der Ansprüche 6 bis 9,
**dadurch gekennzeichnet, dass**
die Gleitscheibe (52) 1,1 Gew.% bis 1,4 Gew.% Kohlenstoff, 16 Gew.% bis 20 Gew.% Chrom, 4,8 Gew.% bis 7,0 Gew.% Molybdän, 16 Gew.% bis 20 Gew.% Nickel, 0,5 Gew.% bis 1,5 Gew.% Silizium, maximal 2 Gew.% weitere Elemente sowie den Rest Eisen enthält.

12. Abgasklappenvorrichtung für eine Verbrennungskraftmaschine nach einem der vorhergehenden Ansprüche,
**dadurch gekennzeichnet, dass**
die Keramikscheibe (48) aus einem mit Magnesiumoxid stabilisiertem Zirkonoxid besteht.

13. Abgasklappenvorrichtung für eine Verbrennungskraftmaschine nach einem der Ansprüche 5 bis 12,
**dadurch gekennzeichnet, dass**
die Buchse (50) aus Edelstahl hergestellt ist.

## Claims

1. Exhaust flap device for an internal combustion engine having a flow housing (10) delimiting a flow channel (12),
a flap body (14),
a shaft (16) on which the flap body (14) is fastened,
at least one radial bearing (26, 28) via which the shaft 16) is radially supported in at least one bearing seat (22, 24) of the flow housing (10),
a sealing arrangement (44) comprising a ceramic disc (48) and a bushing (50) mounted on the shaft (16),
**characterized in that**
an axial bearing (40) is mounted in a bore (34) and is made from a sintered metal powder of a high-chromium iron alloy and comprises an austenitic and ferritic composite structure with carbide alloy components and homogenously distributed solid lubricant phases and is axially loaded against the ceramic disc (48) which surrounds the shaft (16) in a manner rotating freely, wherein the axial bearing (40) comprises a spherical recess (46) facing the ceramic disc (48), on which a correspondingly shaped spherical bulge of the ceramic disc (48) abuts, wherein the ceramic disc (48) is loaded towards the axial bearing (40) by means of a spring element (38).

2. Exhaust flap device for an internal combustion engine according to claim 1, **characterized in that** the axial bearing (40) contains molybdenum disulfide as the solid lubricant.

3. Exhaust flap device for an internal combustion engine according to one of claims 1 or 2, **characterized in that** the axial bearing (40) contains 0.8 % by weight to 1.4 % by weight carbon, 18 % by weight to 23 % by weight chromium, 4.5 % by weight to 6.5 % by weight molybdenum, 1 % by weight to 2 % by weight vanadium, 1.5 % by weight to 2.5 % by weight tungsten, 2 % by weight to 5 % by weight nickel, 1 % by weight to 2% by weight sulfur, 0.5 % by weight to 2 % by weight silicon, a maximum of 1% by weight other elements, and iron for the remainder.

4. Exhaust flap device for an internal combustion engine according to one of claims 1 or 2, **characterized in that** the axial bearing (40) contains 1.1 % by weight to 1.4 % by weight carbon, 16 % by weight to 20 % by weight chromium, 4.8 % by weight to 7 % by weight molybdenum, 16% by weight to 20 % by weight nickel, 0.5 % by weight to 1.5 % by weight silicon, a maximum of 2% by weight other elements, and iron for the remainder.

5. Exhaust flap device for an internal combustion engine according to one of the preceding claims, **characterized in that** the bushing (50) of the sealing arrangement (44) is positively connected with the ceramic disc (48) so as to transmit torque and abuts on the ceramic disc (48) from a side opposite the axial bearing (40).

6. Exhaust flap device for an internal combustion engine according to one of claims 1 to 4, **characterized in that** the bushing (50) of the sealing arrangement (44) is connected in a positive or substance-bonded manner with a sliding disc (52) which is arranged between the ceramic disc (48) and the bushing (50).

7. Exhaust flap device for an internal combustion engine according to one of the preceding claims, **characterized in that** the shaft (16) with the bushing (50) is loaded via the spring element (38) in the direction of the axial bearing (40) so that the sealing arrangement (44) is compressed.

8. Exhaust flap device for an internal combustion engine according to one of the preceding claims, **characterized in that** the spring element (38) is clamped in a pre-tensioned manner between the end of the axial bearing (40) facing away from the ceramic disc (48) and a lever (36) fastened at one end of the shaft (16), said lever (36) being adapted to be connected with an actuator for the actuation of the shaft (16).

9. Exhaust flap device for an internal combustion engine according to one of claims 5 to 8, **characterized in that** the positive connection is established by two protrusions (53) arranged opposite each other on the circumference of the bushing (50) and directed in the axial direction, said protrusions engaging int correspondingly shaped recesses (51) of the sliding disc (52).

10. Exhaust flap device for an internal combustion engine according to one of claims 6 to 9, **characterized in that** the sliding disc (52) contains 0.8 % by weight to 1.4 % by weight carbon, 18 % by weight to 23 % by weight chromium, 4.5 % by weight to 6.5 % by weight molybdenum, 1 % by weight to 2 % by weight vanadium, 1.5 % by weight to 2.5 % by weight tungsten, 2 % by weight to 5 % by weight nickel, 1 % by weight to 2% by weight sulfur, 0.5 % by weight to 2 % by weight silicon, a maximum of 1% by weight other elements, and iron for the remainder.

11. Exhaust flap device for an internal combustion engine according to one of claims 6 to 9, **characterized in that** the sliding disc (52) contains 1.1 % by weight to 1.4 % by weight carbon, 16 % by weight to 20 % by weight chromium, 4.8 % by weight to 7.0 % by weight molybdenum, 16% by weight to 20 % by weight nickel, 0.5 % by weight to 1.5 % by weight silicon, a maximum of 2% by weight other elements, and iron for the remainder.

12. Exhaust flap device for an internal combustion engine according to one of the preceding claims, **characterized in that** the ceramic disc (48) is made of a magnesium oxide-stabilized zirconium oxide.

13. Exhaust flap device for an internal combustion engine according to one of claims 5 to 12, **characterized in that** the bushing (50) is made of stainless steel.

## Revendications

1. Dispositif de clapet d'échappement pour moteur à combustion interne comprenant
un boitier d'écoulement (10) délimitant un canal d'écoulement (12),
un corps de clapet (14),
un arbre (16) sur lequel est monté le corps de clapet (14),
au moins un palier radial (26, 28) par lequel l'arbre (16) est supporté radialement dans au moins un logement de palier (22, 24) du carter d'écoulement (10),
un ensemble d'étanchéité (44) comprenant un disque en céramique (48) et une douille (50) montée sur ledit arbre (16),
**caractérisé en ce qu'**
un palier axial (49) est monté dans un alésage (34) et est fabriqué d'une poudre métallique frittée d'un alliage de fer à haute teneur en chrome et comprend une structure composite austénitique et ferritique avec des composants en alliage de carbure et des phases lubrifiantes solides uniformément réparties et est sollicitée axialement contre le disque en céramique (48) qui entoure l'arbre (16) d'une manière libre à tourner, ledit palier axial (40) comprenant un évidement sphérique (46) tourné vers le disque en céramique (48) contre lequel s'appuie une courbure sphérique de forme correspondante, la disque en céramique (48) étant sollicitée vers le palier axial (40) par un élément de ressort (38).

2. Dispositif de clapet d'échappement pour moteur à combustion interne selon la revendication 1, **caractérisé en ce que** le palier axial (40) contient du bisulfure de molybdène comme lubrifiant solde.

3. Dispositif de clapet d'échappement pour moteur à combustion interne selon l'une des revendications 1 ou 2, **caractérisé en ce que** le palier axial (40) contient 0,8 % en poids à 1,4 % en poids de carbure, 18 % en poids à 23 % en poids de de chrome, 4,5 % en poids à 6,5 % en poids de molybdène, 1 % en poids à 2 % en poids de vanadium, 1,5 % en poids à 2,5 % en poids de tungstène, 2 % en poids à 5 % en poids de nickel, 1 % en poids à 2 % en poids de soufre, 0,5 % en poids à 2 % en poids de silicium, un maximum de 1 % en poids d'autres éléments, et le reste de fer.

4. Dispositif de clapet d'échappement pour moteur à combustion interne selon l'une des revendications 1 ou 2, **caractérisé en ce que** le palier axial (40) contient 1,1 % en poids à 1,4 % en poids de carbure, 16 % en poids à 20 % en poids de de chrome, 4,8 % en poids à 7,0 % en poids de molybdène, 16 % en poids à 20 % en poids de nickel, 0,5 % en poids à 1,5 % en poids de silicium, un maximum de 2 % en poids d'autres éléments, et le reste de fer.

5. Dispositif de clapet d'échappement pour moteur à combustion interne selon l'une quelconque des revendications précédentes, **caractérisé en ce que** la douille (50) de l'ensemble d'étanchéité (44) est reliée par assemblage de forme avec le disque en céramique (48) d'une manière à transmettre un couple et repose contre le disque en céramique (48) du côté opposé au palier axial (40).

6. Dispositif de clapet d'échappement pour moteur à combustion interne selon l'une des revendications 1 à 4, **caractérisé en ce que** la douille (50) de l'ensemble d'étanchéité (44) est reliée par assemblage de forme ou matériellement avec un disque de glissement (52) d'une manière à transmettre un couple, lequel est disposé entre le disque en céramique (48) et la douille (50].

7. Dispositif de clapet d'échappement pour moteur à combustion interne selon l'une quelconque des revendications précédentes, **caractérisé en ce que** l'arbre (16) avec la douille (50) est sollicitée vers le palier axial (40) par l'intermédiaire dudit élément de ressort (38) de sorte que l'ensemble d'étanchéité (44) est comprimé.

8. Dispositif de clapet d'échappement pour moteur à combustion interne selon l'une quelconque des revendications précédentes, **caractérisé en ce que** ledit élément de ressort (38) est coincé de manière précontrainte entre l'extrémité dudit palier axial (40) détournée de ladite disque en céramique et un levier (36) monté à son extrémité de l'arbre (16), ledit levier (36) pouvant être relié à un actionneur pour l'actionnement de l'arbre (16).

9. Dispositif de clapet d'échappement pour moteur à combustion interne selon l'une des revendications 5 à 8, **caractérisé en ce que** la liaison par assemblage de forme est réalisée par deux saillies (53) disposées face-à-face sur la circonférence de la douille (50) et orientées dans la direction axiale, lesdites saillies engageant dans des évidements (51) de forme correspondante du disque de glissement (52) ou du disque en céramique (48).

10. Dispositif de clapet d'échappement pour moteur à combustion interne selon l'une des revendications 6 à 9, **caractérisé en ce que** le disque de glissement (51) contient 0,8 % en poids à 1,4 % en poids de carbure, 18 % en poids à 23 % en poids de de chrome, 4,5 % en poids à 6,5 % en poids de molybdène, 1 % en poids à 2 % en poids de vanadium, 1,5 % en poids à 2,5 % en poids de tungstène, 2 % en poids à 5 % en poids de nickel, 1 % en poids à 2 % en poids de soufre, 0,5 % en poids à 2 % en poids de silicium, un maximum de 1 % en poids d'autres éléments, et le reste de fer.

11. Dispositif de clapet d'échappement pour moteur à combustion interne selon l'une des revendications 6 à 9, **caractérisé en ce que** le disque de glissement (51) contient 1,1 % en poids à 1,4 % en poids de carbure, 16 % en poids à 20 % en poids de de chrome, 4,8 % en poids à 7,0 % en poids de molybdène, 16 % en poids à 20 % en poids de nickel, 0,5 % en poids à 1,5 % en poids de silicium, un maximum de 2 % en poids d'autres éléments, et le reste de fer.

12. Dispositif de clapet d'échappement pour moteur à combustion interne selon l'une quelconque des revendications précédentes, **caractérisé en ce que** le disque en céramique (48) est fabriqué d'un oxyde de circonium stabilisé avec de l'oxyde de magnésium.

13. Dispositif de clapet d'échappement pour moteur à combustion interne selon l'une des revendications 5 à 12, **caractérisé en ce que** la douille (50) est en acier inoxydable.
